(19) Europäisches Patentamt
European Patent Office
Office européen des brevets

(11) Numéro de publication : **0 337 873 B1**

# (12) FASCICULE DE BREVET EUROPEEN

(45) Date de publication du fascicule du brevet : **27.11.91 Bulletin 91/48**

(51) Int. Cl.[5] : **C08F 220/12**

(21) Numéro de dépôt : **89400987.7**

(22) Date de dépôt : **11.04.89**

(54) **Dispersions aqueuses de polymères thermoréticulables à base de (méth)acrylate d'alkyle, leur procédé de préparation et leur application notamment comme liants et/ou agents d'imprégnation.**

(30) Priorité : **13.04.88 FR 8804883**

(43) Date de publication de la demande : **18.10.89 Bulletin 89/42**

(45) Mention de la délivrance du brevet : **27.11.91 Bulletin 91/48**

(84) Etats contractants désignés : **AT BE CH DE ES FR GB GR IT LI LU NL SE**

(56) Documents cités : **FR-A- 2 595 694**

(73) Titulaire : **SOCIETE FRANCAISE HOECHST TOUR ROUSSEL HOECHST 1 Terrasse Bellini F-92800 Puteaux (FR)**

(72) Inventeur : **Cuirassier, Fernand 5 rue de la Légion d'Honneur F-93200 Saint Denis (FR)**
Inventeur : **Wilhelm, Didier 26 rue Diderot F-92130 Issy Les Moulineaux (FR)**
Inventeur : **Blanc, Alain 21bis rue Galvanis F-75017 Paris (FR)**

(74) Mandataire : **Rinuy, Santarelli 14, avenue de la Grande Armée F-75017 Paris (FR)**

EP 0 337 873 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

**Description**

La présente invention concerne de nouvelles dispersions aqueuses de polymères thermoréticulables à base de (méth)acrylate d'alkyle, leur procédé de préparation et leur application notamment comme liants et/ou agents d'imprégnation.

On utilise couramment comme liants et/ou agents d'imprégnation des dispersions aqueuses de polymères thermoréticulables à base de (méth)acrylate d'alkyle dans lesquelles la réticulation s'obtient par des dérivés fonctionnels du (méth)acrylamide tels que le N-méthylol(méth)acrylamide, l'acide acrylamidoglycolique, l'acryloylamino-2 méthoxy-2 acétate de méthyle. Mais ces monomères libèrent, lors de leur mise en oeuvre, des quantités plus ou moins importantes de formaldéhyde. Or, pour des raisons de sécurité et de confort, on recherche depuis très longtemps, des agents liants et/ou des agents d'imprégnation qui lors de leur application conduisent à des produits finis donnant entière satisfaction tant aux lavages, qu'aux nettoyages à sec et qui, soit à l'usage, soit lors de leur mise en oeuvre, ne dégagent aucune odeur de formaldéhyde.

Afin de répondre à ce besoin, la Demanderesse à découvert de nouvelles dispersions aqueuses de polymères thermoréticulables à base de (méth)acrylate d'alkyle, susceptibles d'être utilisées comme liants et/ou agents d'imprégnation stables aux lavages et aux nettoyages à sec, et ne libérant aucune trace de formaldéhyde, aussi bien lors de leur utilisation que lors de l'usage des articles les contenant.

Les dispersions aqueuses de copolymères thermoréticulables selon la présente invention contiennent un copolymérisat préparé en émulsion aqueuse renfermant :

— de 90 à 99% en poids, de motifs dérivant de la polymérisation d'un mélange de monomères principaux (a) constitué de 0,1 à 10% en poids d'acides mono- et/ou di-carboxyliques en $C_3$-$C_5$, α,β-éthyléniques et/ou leurs amides, de 0 à 10% en poids de styrène et/ou d'acrylonitrile et le complément à 100% d'esters de l'acide acrylique et/ou de l'acide méthacrylique et d'alcanols en $C_1$-$C_{12}$ ;

— de 10 à 1% en poids de motifs de formule générale (I)

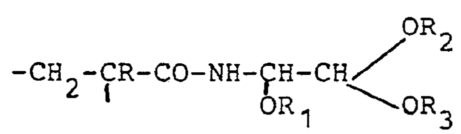

(I)

pouvant dériver de la polymérisation de monomères (b) de formule générale (II)

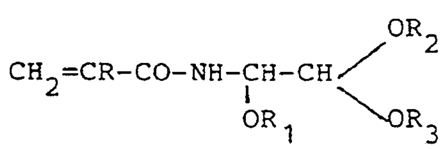

(II)

où R représente un atome d'hydrogène ou un radical méthyle, $R_1$ représente un atome d'hydrogène ou un radical alkyle en $C_1$-$C_4$, et $R_2$ et $R_3$ sont, soit identiques et représentent alors chacun un groupement alkyle en $C_1$-$C_8$ soit forment ensemble un groupement : —$CH_2$-$CR_4R_5$-$(CH_2)_n$— dans lequel n = 0 ou 1 et $R_4$ et $R_5$, identiques ou différents, représentent un atome d'hydrogène ou un groupe méthyle.

L'invention a donc notamment pour objet les dispersions aqueuses de copolymères thermoréticulables contenant un copolymérisat préparé en émulsion aqueuse, à base :

(a) de 90 à 99% en poids, c'est-à-dire à titre de monomères principaux, d'un mélange constitué de 0,1 à 10% en poids d'acides mono -et/ou di carboxyliques en $C_3$-$C_5$, α,β-éthyléniques et/ou leurs amides, de 0 à 10% en poids de styrène et/ou d'acrylonitrile et le complément à 100% d'esters de l'acide acrylique et/ou de l'acide méthacrylique et d'alcanols en $C_1$-$C_{12}$ ;

(b) de 10 à 1% en poids de monomères de formule générale (II)

L'invention a plus particulièrement pour objet les dispersions aqueuses telles que définies ci-dessus caractérisées en ce que le copolymérisat préparé en émulsion aqueuse est à base de :

— 92% à 98% en poids d'un mélange de 95 à 99,8 parties d'esters de l'acide acrylique et/ou de l'acide méthacrylique et d'alcanols en $C_1$-$C_{12}$ et de 0,2 à 5 parties d'acide acrylique, d'acide méthacrylique, d'acrylamide et/ou de méthacrylamide.

— 2 à 8% en poids de monomères de formule générale (II).

Parmi ces derniers produits, l'invention a notamment pour objet les copolymérisats préparés en émulsion aqueuse à base de :

— 92 à 98% en poids d'un mélange de 95 à 99,8 parties de (méth)acrylate de méthyle, de (méth)acrylate d'éthyle, de (méth)acrylate de n-butyle, et de 0,2 à 5 parties d'acide acrylique et/ou d'acrylamide.

— 2 à 8% en poids de monomères de formule générale (II).

Ces copolymères sont préparés par polymérisation classique d'une émulsion aqueuse des monomères, effectuée avantageusement à un pH tamponné compris entre 5 et 8. Ils se présentent dans les dispersions aqueuses de la présente invention à l'état dispersé sous forme de particules dont les dimensions moyennes sont d'environ 200 nm. Ces dipersions possèdent en général une teneur en copolymères de ce genre de 30 à 65% en poids et de préférence de 40 à 55% en poids.

Les monomères de formule générale (II) sont connus par la demande de brevet français n° 2595694 et parmi ceux-ci, on peut citer plus particulièrement le N-(dialcoxyl-2,2 hydroxy-1 éthyl)-(méth)acrylamide et le N-(trialcoxyl-1,2,2 éthyl)-(méth)acrylamide dans lesquels le terme alcoxyle désigne un radical alcoxyle en $C_1$-$C_4$ tels que le N-(diméthoxy-2,2 hydroxy-1 éthyl)-acrylamide, désigné ci-après DMHEA, le N-(diméthoxy-2,2 hydroxy-1 éthyl)-méthacrylamide, DMHEMA, le N-(triméthoxy-1,2,2 éthyl)-acrylamide, TMEA, le N-(triméthoxy-1,2,2 éthyl)-méthacrylamide, TMEMA, le N-(dibutoxy-2,2 hydroxy-1 éthyl)-acrylamide, DBHEA, le N-(dibutoxy-2,2 hydroxy-1 éthyl)-méthacrylamide, DBHEMA, le N-(tributoxy-1,2,2 éthyl)-acrylamide, TBEA, le N-(tributoxy-1,2,2 éthyl)- méthacrylamide, TBEMA. Ces produits se présentent sous forme de cristaux incolores à l'exception du DMHEA et du TBEMA qui sont des liquides incolores. Certaines constantes physiques de ces monomères sont données dans le tableau III ci dessous.

Comme esters de l'acide acrylique et/ou méthacrylique et d'alcanols en $C_1$-$C_{12}$, on peut citer notamment l'acrylate et le méthacrylate de méthyle, l'acrylate et le méthacrylate d'éthyle, l'acrylate et le méthacrylate de n-butyle, l'acrylate et le méthacrylate d'isobutyle, l'acrylate et le méthacrylate d'éthyl-2 héxyle, l'acrylate et le méthacrylate d'hydroxy-2 propyle, l'acrylate et le méthacrylate de dodécyle.

Comme acide mono- et di-carboxylique en $C_3$-$C_5$, $\alpha,\beta$-éthylénique, outre les acides acrylique et méthacrylique, on peut citer notamment l'acide itaconique.

Comme amide d'acide mono et di-carboxylique en $C_3$-$C_5$, $\alpha,\beta$-éthylénique, on peut citer notamment l'acrylamide, le méthacrylamide.

Les dispersions aqueuses de copolymères thermoréticulables de la présente invention peuvent se préparer par copolymérisation classique en émulsion aqueuse du mélange des monomères principaux (a) et des monomères (b) de formule générale (II) dans les proportions indiquées avec l'emploi d'amorceurs de polymérisation générateurs de radicaux libres, d'agents émulsifiants et/ou dispersants ainsi qu'éventuellement d'agents de transfert.

A titre d'amorceurs de polymérisation appropriés, on peut citer, par exemple, le peroxyde d'hydrogène, le peroxodisulfate de sodium, de potassium ou d'ammonium, les hydroperoxydes d'acyle, les hydroperoxydes d'alkyle. La proportion d'amorceur varie généralement de 0,01 à 5% en poids par rapport au poids des monomères. Les composés peroxo mentionnés précédemment peuvent aussi se mettre en oeuvre en combinaison avec des agents réducteurs, comme des catalyseurs redox. A titre d'exemples d'agents réducteurs appropriés, on peut citer les disulfites de métal alcalin, les hydrogènosulfites de métal alcalin ou d'ammonium, les thiosulfates de métal alcalin, l'acide ascorbique, les sulfates de fer (II). Lors de l'emploi de catalyseurs redox, il est fréquemment avantageux d'utiliser des promoteurs tels que des sels de cuivre, de manganèse, de fer, de cobalt, et/ou de nickel.

A titre d'agents émulsifiants, on utilise habituellement des agents émulsifiants anioniques et/ou non ioniques tels que, par exemple, des acides gras en $C_6$-$C_{18}$, des sulfates d'alcanols aliphatiques en $C_4$-$C_{18}$ des alkylsulfonates en $C_{10}$-$C_{18}$ des alkylarylsulfonates en $C_{10}$-$C_{18}$ des hydroxyalkylsulfonates en $C_4$-$C_{18}$, des sels de métaux alcalins et d'ammonium d'esters sulfosucciniques, des produits d'addition ou adducts sulfonés de l'oxyde d'éthylène et d'alcanols aliphatiques, d'amides aliphatiques, d'acides gras ou d'alkylphénols. La proportion d'agents émulsifiants et/ou dispersants varie en général de 0,1 à 10% et de préférence de 1 à 6% en poids par rapport au poids des monomères.

A titre d'agents de transfert, on peut citer notamment, le tétrachlorure de carbone, l'alcool isopropylique, le dodécanol, le paratertiobutylthiophénol, le dodécanethiol.

La polymerisation en émulsion s'effectue en général, à des températures de 20 à 95°C, de préférence de 60 à 85°C, à un pH compris entre 2 et 9, avantageusement compris entre 5 et 8.

Selon un mode avantageux, la polymerisation est réalisée en milieu tamponné, comme par exemple, en présence d'un sel de métal alcalin, d'un acide faible comme l'acétate de sodium, l'hydrogènocarbonate de sodium. La polymérisation est généralement conduite par addition lente d'une préémulsion aqueuse contenant les monomères, le système émulsifiant et/ou dispersant, l'amorceur, et éventuellement, un agent de transfert et un agent tampon dans une phase aqueuse agitée, maintenue à une température comprise entre 60 et 85°C et contenant éventuellement en solution un amorceur de polymérisation.

Selon un mode de réalisation particulier, les copolymérisats contenant des motifs de formule générale (I)

dans laquelle $R_1$ est un atome d'hydrogène, c'est-à-dire, des motifs de formule générale (III)

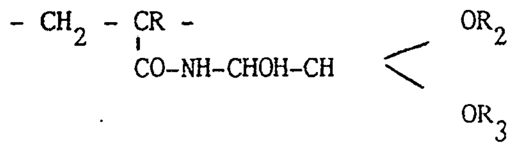

(III)

dans laquelle R, $R_2$ et $R_3$ ont la signification donnée précédemment, peuvent s'obtenir à partir de copolymères porteurs de groupements carbamoyles, en faisant réagir des copolymères préparés en émulsion aqueuse contenant en liaison polymère, d'une part les monomères principaux (a) susmentionnés dans les proportions précitées, et d'autre part de l'acrylamide et/ou du méthacrylamide, en quantités équivalentes appropriées avec un monoacétal du glyoxal de formule générale (IV)

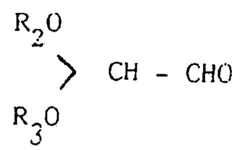

(IV)

dans laquelle $R_2$ et $R_3$ ont la signification donnée précédemment, réaction au cours de laquelle on peut mettre en oeuvre des quantités équivalentes, excédentaires ou déficitaires de monoacétal du glyoxal de formule générale (IV) par rapport au (méth)acrylamide incorporé par polymérisation de manière à obtenir la quantité souhaitée de motifs de formule générale (III). De plus, on peut encore obtenir les copolymères contenant les motifs récurrents de formule générale (III) en polymérisant un mélange de monomères (a) contenant de l'acrylamide et/ou du méthacrylamide en émulsion aqueuse, en présence de monoacétal du glyoxal de formule générale (IV).

Lors de la mise en oeuvre du procédé d'obtention des dispersions aqueuses selon la présente invention qui contiennent un copolymérisat possédant des motifs de formule générale (III), on peut lors de la copolymérisation en émulsion aqueuse, utiliser de l'acrylamide ou du méthacrylamide en proportions équivalentes au lieu des monomères de formule générale (II) et introduire, soit dans la phase aqueuse, soit dans la préémulsion, soit dans le milieu réactionnel au cours de la polymérisation, ou en fin de polymérisation, un monoacétal de glyoxal de formule générale (IV) en proportions stoechiométriques ou non par rapport au (méth)acrylamide présent.

Dans le cas où le monacétal du glyoxal de formule générale (IV) est introduit directement dans le milieu réactionnel, d'une part, cette introduction est réalisée lentement, soit au fur et à mesure de l'avancement de la réaction de polymérisation, séparément ou simultanément avec l'introduction de la préémulsion, soit après l'introduction des monomères, et d'autre part, le pH du milieu réactionnel est tamponné et il est réglé avantageusement à une valeur comprise entre 6,8 et 8.

Les dispersions aqueuses de copolymères selon la présente invention peuvent être utilisées comme liants et/ou agents d'imprégnation d'articles textiles divers, tissés ou non tissés, de pâtes d'impression pour textiles, de mats de fibres minérales ou organiques, naturelles et/ou synthétiques, ou de compositions pour le couchage du papier. Dans ces applications, les dispersions aqueuses de copolymères selon la présente invention peuvent aussi contenir des additifs classiques à ce type d'application comme, par exemple, des pigments, des colorants, des agents antioxydants, des agents conservateurs, des plastifiants, des agents filmogènes, des catalyseurs de thermoréticulation, en les quantités usuelles.

L'application des dispersions aqueuses selon la présente invention comme liant peut s'effectuer par la mise en oeuvre d'un procédé habituel comme l'imprégnation, le foulardage, l'impression, la pulvérisation, suivi de l'élimination du liant excédentaire par exprimage, par exemple, puis d'un séchage et enfin d'une cuisson de l'article traité pendant quelques minutes, généralement durant 0,5 à 15 minutes, à des températures de 110 à 250°C. Quant au séchage, il est réalisé en l'espace de 1 à 10 minutes à des températures de 100 à 170°C. En général, on utilise une proportion de dispersions conformes à la présente invention telle que l'article fini présente une teneur en copolymères comprise entre 3 et 60% en poids.

Les exemples suivants illustrent l'invention sans toutefois la limiter.

Les parties et les pourcentages qui figurent dans la description précédente et les exemples qui suivent se rapportent aux poids.

EXEMPLES 1-9

On prépare une émulsion en mélangeant à la température ambiante :

— 459 g d'un mélange de monomères contenant en proportions pondérales :
  x % d'acrylate de butyle,
  y % d'acrylate d éthyle,
  z % de méthacrylate de méthyle,
  q % d'acide acrylique,
  p % de monomère (b) de formule générale (I),
— 18 g d'un mélange émulsifiant constitué en proportions pondérales par :
  — 37,5% de nonylphénol éthoxylé avec 30 moles d'oxyde d'éthylène
  — 37,5% d'alcool oléocétylique éthoxylé avec 25 moles d'oxyde d'éthylène,
  — 25% de lauryléthersulfate de sodium,
— 1 g d'hydrogènocarbonate de sodium,
— 1,2 g de peroxodisulfate de sodium,
— 270, 8 g d'eau.

Cette émulsion, présentant un pH de 4,65, est ensuite introduite en quatre heures sous agitation dans 250 g d'eau maintenue à 80 ± 2°C.

L'introduction terminée, on refroidit le milieu réactionnel à la température ambiante, on le filtre pour éliminer éventuellement quelques impuretés mécaniques puis, si nécessaire, on ajuste son pH à 5,7 ± 0,2.

On obtient ainsi 1000 g d'une dispersion possédant les caractéristiques mentionnées dans le tableau I, dans lequel les abréviations utilisées ont la signification suivante :

— ES : extrait sec exprimé en pourcentage pondéral et déterminé par séchage de 1 g de dispersion durant 3 heures à 105°C ;
— V : viscosité Brookfield exprimée en mPa · s et déterminée à la température ambiante avec un viscosimètre Brookfield RVT équipé d'un axe, ax, de 1 à 5 tournant à la vitesse de 100 tours par minute ;
— Dz : taille des particules (moyenne d'ordre z) exprimée en nanomètres.
— TG : taux de gonflement, déterminé à la température ambiante par immersion dans le trichloroéthylène d'une éprouvette plane circulaire de 50 mm de diamètre découpée sur un film sec, d'environ 0,5 mm d'épaisseur, de la dispersion à tester. Le taux de gonflement est mesuré simultanément sur un film non traité thermiquement, $TG_b$, et sur un film traité pendant 10 minutes à 150°C, $TG_t$. Il est calculé par la relation :

$$TG = \frac{df-di}{di} \times 100$$

dans laquelle di est le diamètre initial de l'éprouvette et df son diamètre final.

— Tg : température de transition vitreuse exprimée en degrés Celsius et déterminée par analyse thermique différentielle sur un film de la dispersion à tester.
— I' : indice de polydispersité en taille,
— Ex : numéro des exemples
— Tf : taux de formaldéhyde libre déterminé par chromatographie à haute performance sur un échantillon de la dispersion.

Exemples 10-13

On prépare une émulsion en mélangeant à la température ambiante :

— 471,2 g d'un mélange de monomères contenant en proportions pondérales :
  x % d'acrylate de butyle,
  y % d'acrylate d'éthyle,
  z % de méthacrylate de méthyle,
  q % d'acide acrylique
  p % de monomère (b) de formule générale (II)
  s % de méthacrylate d'hydroxy-2 propyle, MAHP
— 21,6 g d'un mélange émulsifiant constitué en proportions pondérales par :
  20,83% de laurylethersulfate de sodium,
  47,92% denonylphénol éthoxylé avec 30 moles d'oxyde d'éthylène,

31,25% d'alcool oléocétylique éthoxylé avec 25 moles d'oxyde d'éthylène,
— 0,68 g d'acétate de sodium,
— 1,22 g de peroxodisulfate de sodium,
— 275,03 g d'eau.

Cette préémulsion, présentant un pH de 5,75 est ensuite introduite en quatre heures sous agitation dans 250 g d'eau et 0,27 g de peroxodisulfate de sodium maintenus à 80 ± 2°C.

L'introduction terminée, on refroidit le milieu réactionnel à la température ambiante, on le filtre pour éliminer éventuellement quelques impuretés mécaniques puis, si nécessaire, on ajuste son pH à 5,7 ± 0,2.

On obtient ainsi 1020 g d'une dispersion possédant les caractéristiques mentionnées dans le tableau I pour les dispersions exemptes de méthacrylate d'hydroxy-2 propyle et dans le tableau II pour les autres.

EXEMPLE 14

On prépare une émulsion en mélangeant à la température ambiante :
— 450 g d'un mélange de monomères contenant en proportions pondérales :
21,05% d'acrylate de butyle
21,05% d'acrylate de lauryle, AL,
52,40% de méthacrylate de méthyle,
0,50% d'acide acrylique
5,0% de N-(diméthoxy-2,2 hydroxy-1 éthyl)-méthacrylamide, DMHEMA,
— 18 g d'un mélange émulsifiant identique à celui utilisé dans les exemples 1-9,
— 1 g d'hydrogènocarbonate de sodium,
— 1,2 g de peroxodisulfate de sodium,
— 279,8 g d'eau.

Cette émulsion est ensuite introduite en quatre heures sous agitation dans 250 g d'eau maintenue à 80 ± 2°C.

L'introduction terminée, on refroidit le milieu réactionnel à la température ambiante, puis on le filtre pour éliminer éventuellement quelques impuretés mécaniques.

On obtient ainsi 1000 g d'une dispersion aqueuse possédant les caractéristiques mentionnées dans le tableau II.

EXEMPLES 15

On prépare une émulsion en mélangeant à la température ambiante :
— 450 g d'un mélange de monomères contenant en proportions pondérales :
56,3% (253,35 g) d'acrylate d'éthyle,
7,9% (35,55 g) d'acrylate de butyle,
34,3% (154,35 g) de méthacrylate de méthyle,
0,5% (2,25 g) d'acide acrylique,
1,0% (4,5 g) d'acrylamide,
— 21,6 g d'un mélange émulsifiant identique à celui utilisé dans les exemples 10-13,
— 0,68 g d'acétate de sodium,
— 1,22 g de peroxodisulfate de sodium,
— 266,23 g d'eau.

Cette préémulsion présentant un pH de 4,20, est ensuite introduite en quatre heures sous agitation dans 250 g d'eau et 0,27 g de peroxodisulfate d'ammonium maintenues à 80 ± 2°C.

L'introduction terminée, on ajuste le pH du milieu réactionnel à 8 par addition de soude 5 N puis on ajoute sous agitation, en maintenant la température à 40 ± 2°C, 6,60 g (63 mmoles) de diméthoxyéthanal en solution dans 7,2 g d'eau, puis on abandonne le milieu réactionnel 1 heure sous agitation à 40°C, on le refroidit ensuite à la température ambiante, et enfin, on le filtre.

On obtient ainsi 1010 g d'une dispersion dont le copolymérisat est à base, en proportions pondérales, de 55,49% d'acrylate d'éthyle, 33,8% de méthacrylate de méthyle, 7,79% d'acrylate de butyle, 2,43% de DMHEA et 0,49% d'acide acrylique. Les caractéristiques de cette dispersion sont données dans le tableau II.

EXEMPLES DE COMPARAISON C1 ET C2

Ces deux exemples de comparaison ont été effectués selon le procédé décrit pour les exemples 1-9 et les caractéristiques des dispersions obtenues sont données dans le tableau II aux lignes C1 et C2.

Le copolymère de la dispersion $C_1$ est à base, uniquement d'acrylate de butyle (42,1%), d'acrylate d'éthyle (57,40%) et d'acide acrylique (0,5%), et il fournit un film entièrement soluble dans le trichloroéthylène, même après un traitement thermique.

Le copolymérisat de la dispersion $C_2$ est à base d'acrylate de butyle (40,95%), d'acrylate d'éthyle (55,80%), d'acide acrylique (0,5%) et de N-méthylol acrylamide, NMA, (2,75%), et la dispersion correspondante contient 550 ppm de formaldéhyde libre.

De ce qui précède il ressort que les dispersions aqueuses de l'invention donnent satisfaction et ne libèrent aucune trace de formaldéhyde.

## TABLEAU I

| EX | Monomères | | | | | | ES | TG | | V | | Dz | I' | Tg | Tf |
|---|---|---|---|---|---|---|---|---|---|---|---|---|---|---|---|
| | x | y | z | q | (b) | p | | $TG_b$ | $TG_t$ | ax | | | | | ppm |
| 1 | 41,27 | 0 | 56,27 | 0,5 | TMEA | 1,96 | 45,1 | sol. | 140 | 1 | 44,5 | 230 | 0,05 | 25 | 0 |
| 2 | 41,27 | 0 | 56,27 | 0,5 | TMEMA | 1,96 | 45,2 | sol. | 150 | 1 | 37 | 290 | 0,07 | 25,5 | 0 |
| 3 | 40,1 | 0 | 54,7 | 0,45 | DMHEA | 4,75 | 46,1 | 152 | 136 | 2 | 198 | 240 | 0,05 | 23,5 | 0 |
| 4 | 40,1 | 0 | 54,7 | 0,45 | DMHEMA | 4,75 | 48 | 132 | 150 | 1 | 66,5 | 270 | 0,21 | 26,5 | 0 |
| 5 | 39,15 | 0 | 53,4 | 0,45 | DMHEA | 7 | 48,1 | 110 | 98 | 5 | 2800 | 720 | 0,5 | 22,0 | 0 |
| 6 | 40,1 | 0 | 54,7 | 0,45 | DMHEA | 4,75 | 48,0 | 154 | 136 | 2 | 260 | 240 | 0,07 | 22,5 | 0 |
| 7 | 39,15 | 0 | 53,4 | 0,45 | DMHEMA | 7 | 48,1 | 110 | 110 | 1 | 97,5 | 190 | 0,03 | 33,5 | 0 |
| 8 | 39,15 | 0 | 53,4 | 0,45 | DMHEA | 7 | 45,1 | 150 | 140 | 2 | 216 | 290 | 0,10 | 23,5 | 0 |
| 9 | 7,7 | 75,0 | 11,6 | 0,5 | DMHEMA | 5,2 | 46,4 | 190 | 84 | 1 | 67,5 | 190 | 0,05 | - 5,5 | 0 |
| 10 | 7,9 | 77,2 | 11,9 | 0,5 | DMHEA | 2,5 | 45,9 | 164 | 110 | 1 | 49,5 | 200 | 0,03 | -10,5 | 0 |
| 11 | 7,9 | 75,35 | 11,85 | 0,5 | DMHEA | 4,4 | 46,8 | 144 | 72 | 1 | 81,0 | 190 | 0,07 | - 8 | 0 |
| 12 | 7,7 | 75,10 | 11,60 | 0,5 | DMHEMA | 5,1 | 48,0 | 168 | 62 | 1 | 77,5 | 190 | 0,04 | - 7 | 0 |

Sol. : l'éprouvette est soluble dans le trichloroéthylène, ce qui indique l'absence de réticulation.

## TABLEAU II

| EX | Monomères x | y | z | q | s | AL % | (b) | p | NMA % | ES | TG $TG_b$ | $TG_t$ | V ax | V | Dz | I' | Tg | Tf ppm |
|---|---|---|---|---|---|---|---|---|---|---|---|---|---|---|---|---|---|---|
| 13 | 7,43 | 72,22 | 11,19 | 0,47 | 3,76 | 0 | DMHEMA | 4,93 | 0 | 46,1 | 120 | 64 | 1 | 63 | 190 | 0,04 | - 6 | 0 |
| 14 | 21,05 | 0 | 52,40 | 0,5 | 0 | 21,05 | DMHEMA | 5,0 | 0 | 46,25 | 124 | 128 | 1 | 91,5 | 142 | 0,02 | 13 | 0 |
| 15 | 7,79 | 55,49 | 33,80 | 0,49 | 0 | 0 | DMHEA | 2,43 | 0 | 45,96 | sol | 160 | 1 | 51,5 | 210 | 0,04 | 10 | 0 |
| $C_1$ | 42,10 | 0 | 57,40 | 0,5 | 0 | 0 | | 0 | 0 | 45,9 | sol | sol | 1 | 61 | 170 | 0,02 | 23,5 | 0 |
| $C_2$ | 40,95 | 0 | 55,80 | 0,5 | 0 | 0 | | 0 | 2,75 | 46,9 | 132 | 100 | 2 | 300 | 240 | 0,08 | 20,5 | 550 |

AL : acrylate de lauryle

NMA : N-méthylol acrylamide

TABLEAU III

Caractéristiques physiques des monomères de formule générale (II)

| ABREVIATION | R | $R_1$ | $R_2 = R_3$ | ASPECT | POINT DE FUSION |
|---|---|---|---|---|---|
| DMHEA | H | H | Me | liquide | |
| DMHEMA | Me | H | Me | solide incolore | 77 °C |
| DBHEA | H | H | nBu | solide incolore | 51 °C |
| DBHEMA | Me | H | nBu | solide incolore | 37 °C |
| TMEA | H | Me | Me | solide incolore | 70 °C |
| TMEMA | Me | Me | Me | solide incolore | 38 °C |
| TBEA | H | nBu | nBu | solide incolore | 38 °C |
| TBEMA | Me | nBu | nBu | liquide | |

## Revendications

1. Dispersions aqueuses de copolymères thermoréticulables à base de (méth)acrylate d'alkyle caractérisées par le fait qu'elles contiennent un copolymérisat préparé en émulsion aqueuse renfermant :

— de 90 à 99% en poids, de motifs dérivant de la polymérisation d'un mélange de monomères principaux (a) constitué de 0,1 à 10% en poids d'acides mono- et/ou di-carboxyliques en $C_3$-$C_5$, α-β-éthyléniques et/ou leurs amides, de 0 à 10% en poids de styrène et/ou d'acrylonitrile et le complément à 100% d'esters de l'acide acrylique et/ou de l'acide méthacrylique et d'alcanols en $C_1$-$C_{12}$ ;

— de 10 à 1% en poids de motifs de formule générale (I)

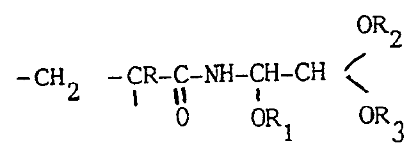

(I)

dans laquelle R représente un atome d'hydrogène ou un radical méthyle, $R_1$ représente un atome d'hydrogène ou un radical alkyle en $C_1$-$C_4$, et $R_2$ et $R_3$ sont, soit identiques, et ils représentent alors chacun un groupement alkyle en $C_1$-$C_8$, soit forment ensemble un groupement —$CH_2$-$CR_4R_5$-$(CH_2)_n$— dans lequel n est 0 ou 1 et $R_4$ et $R_5$ identiques ou différents, représentent un atome d'hydrogène ou un groupe méthyle.

2. Dispersions selon la revendication 1 caractérisées par le fait que le copolymérisat renferme :

— de 92 à 98% en poids de motifs dérivant de la polymérisation d'un mélange de 95 à 99,8 parties d'esters de l'acide acrylique et/ou de l'acide méthacrylique et d'alcanols en $C_1$-$C_{12}$ et de 0,2 à 5 parties d'acide acrylique, d'acide méthacrylique, d'acrylamide et/ou de méthacrylamide et

— de 2 à 8% en poids de motifs de formule générale (I).

3. Dispersions selon la revendication 1 ou 2 caractérisées par le fait que le copolymérisat renferme :

— de 92 à 98% en poids de motifs dérivant de la polymérisation d'un mélange de 95 à 99,8 parties de (méth)acrylate de méthyle, de (méth)acrylate d'éthyle, de (méth)acrylate de n-butyle, et de 0,2 à 5 parties d'acide acrylique et/ou d'acrylamide et

— de 2 à 8% en poids de motifs de formule générale (I).

4. Dispersions selon l'une quelconque des revendications 1 à 3 caractérisées par le fait que dans la formule générale (I) R représente un atome d'hydrogène ou un radical méthyle, $R_1$ représente un atome d'hydrogène ou un radical alkyle en $C_1$-$C_4$ et $R_2$ et $R_3$ identiques représentent un radical alkyle en $C_1$-$C_4$.

5. Dispersions selon la revendication 4 caractérisées par le fait que dans la formule générale (I), R et $R_1$, identiques ou différents, représentent un atome d'hydrogène ou un radical méthyle et $R_2$ et $R_3$ représentent un radical méthyle.

6. Dispersions selon l'une quelconque des revendications 1 à 5 caractérisées par le fait que le motif de formule générale (I) est de formule générale (III).

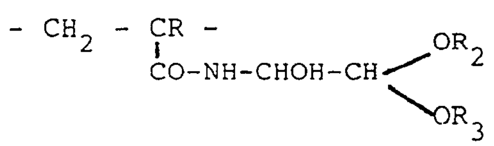

(III)

dans laquelle R, $R_2$ et $R_3$ ont la signification donnée dans ces revendications.

7. Procédé d'obtention des dispersions aqueuses selon l'une quelconque des revendications 1 à 6 caractérisé par le fait que l'on effectue la polymérisation en émulsion aqueuse, à un pH compris entre 5 et 8, en présence d'un amorceur de polymérisation générateur de radicaux libres et d'agents émulsifiants et (ou) dispersant, d'un mélange de monomères constitué par les monomères principaux (a) dans les proportions indiquées dans ces revendications et par un monomère (b) de formule générale (II) ;

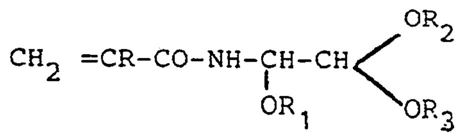

(II)

dans laquelle R, $R_1$, $R_2$ et $R_3$ ont la signification donnée dans ces revendications dans les proportions indiquées dans ces revendications pour le motif de formule générale (I).

8. Procédé d'obtention des dispersions aqueuses selon la revendication 7 caractérisé par le fait que le motif de formule générale (III) résulte de la réaction de copolymères préparés en émulsion aqueuse contenant en liaison polymère d'une part les monomères principaux (a) et d'autre part de l'acrylamide et/ou du méthacrylamide avec un monoacétal du glyoxal de formule générale (IV) ;

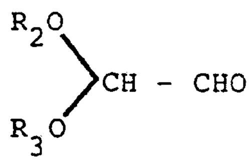

(IV)

dans laquelle $R_2$ et $R_3$ ont la signification donnée dans cette revendication en quantités correspondantes pour respecter la proportion de 1 à 10% de ce motif de formule générale (III) dans ledit copolymérisat.

9. Application des dispersions selon l'une quelconque des revendications 1 à 8 à l'obtention de liants et/ou d'agents d'imprégnation.

**Patentansprüche**

1. Wässerige Dispersionen von thermisch vernetzbaren Copolymeren auf Basis von Alkyl(meth)acrylat, dadurch gekennzeichnet, daß sie ein Copolymerisat enthalten, das in wässeriger Emulsion hergestellt wird, umfassend :

90 bis 99 Gew.% Einheiten, die von der Polymerisation einer Mischung von Hauptmonomeren (a) abgeleitet sind, welche Mischung aus 0,1 bis 10 Gew.% α-β-ethylenischen $C_3$-$C_5$-Mono- und/oder Dicarbonsäuren und/oder ihren Amiden, 0 bis 10 Gew.% Styrol und/oder Acrylnitril und der restliche Teil auf 100% aus Acrylsäure- und/oder Methacrylsäureestern und $C_1$-$C_{12}$-Alkanolen besteht ;

10 bis 1 Gew.% Einheiten der allgemeinen Formel (I)

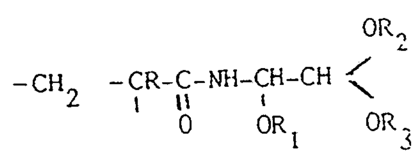

(I),

worin R ein Wasserstoffatom oder ein Methylrest ist, $R_1$ ein Wasserstoffatom oder einen $C_1$-$C_4$-Alkylrest bedeutet, und $R_2$ und $R_3$ entweder gleich sind und dann jeweils eine $C_1$-$C_8$-Alkylgruppe darstellen oder miteinander eine Gruppe —$CH_2$-$CR_4R_5$-$(CH_2)_n$ bedeuten, worin n Null oder 1 ist und $R_4$ und $R_5$, die gleich oder verschieden sind, ein Wasserstoffatom oder eine Methylgruppe darstellen.

2. Dispersionen nach Anspruch 1, dadurch gekennzeichnet, daß das Copolymerisat

92 bis 98 Gew.% Einheiten, die von der Polymerisation einer Mischung von 95 bis 99,8 Teilen Acrylsäure- und/oder Methacrylsäureester und $C_1$-$C_{12}$-Alkanole und von 0,2 bis 5 Teilen Acrylsäure, Methacrylsäure, Acrylamid und/oder Methacrylamid abgeleitet sind, und

2 bis 8 Gew.% Einheiten der allgemeinen Formel (I) enthält.

3. Dispersionen nach Anspruch 1 oder 2, dadurch gekennzeichnet, daß das Copolymerisat

92 bis 98 Gew.% Einheiten, die von der Polymerisation einer Mischung von 95 bis 99,8 Teilen Methyl(meth)acrylat, Ethyl(meth)acrylat, n-Butyl(meth)acrylat und von 0,2 bis 5 Teilen Acrylsäure und/oder Acrylamid abgeleitet sind, und

2 bis 8 Gew.% Einheiten der allgemeinen Formel (I) enthält.

4. Dispersionen nach einem der Ansprüche 1 bis 3, dadurch gekennzeichnet, daß in der allgemeinen Formel (I) R ein Wasserstoffatom oder ein Methylrest ist, $R_1$ ein Wasserstoffatom oder einen $C_1$-$C_4$-Alkylrest bedeutet und $R_2$ und $R_3$, die gleich sind, einen $C_1$-$C_4$-Alkylrest darstellen.

5. Dispersionen nach Anspruch 4, dadurch gekennzeichnet, daß in der allgemeinen Formel (I) R und $R_1$, die gleich oder verschieden sind, ein Wasserstoffatom oder ein Methylrest sind und $R_2$ und $R_3$ einen Methylrest bedeuten.

6. Dispersionen nach einem der Ansprüche 1 bis 5, dadurch gekennzeichnet, daß die Einheit der allgemeinen Formel (I) die allgemeine Formel (III)

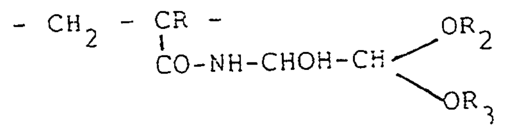 (III)

aufweist, worin R, $R_2$ und $R_3$ die in diesen Ansprüchen angegebene Bedeutung haben.

7. Verfahren zur Herstellung wässeriger Dispersionen nach einem der Ansprüche 1 bis 6, dadurch gekennzeichnet, daß die Polymerisation in wässeriger Emulsion bei einem pH von 5 bis 8 in Anwesenheit eines Polymerisationstarters zum Erzeugen von freien Radikalen und Emulgier- und (oder) Dispergiermitteln, einer Monomermischung, bestehend aus Hauptmonomeren (a) in nach diesen Ansprüchen angegebenen Verhältnissen und aus einem Monomer (b) der allgemeinen Formel (II)

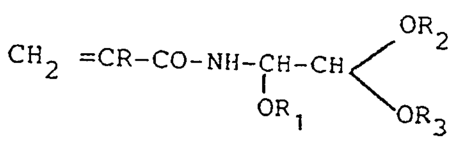 (II),

durchgeführt wird, worin R, $R_1$, $R_2$ und $R_3$ die in diesen Ansprüchen angegebene Bedeutung in nach diesen Ansprüchen für die Einheit der allgemeinen Formel (I) angegebenen Verhältnissen haben.

8. Verfahren zur Herstellung wässeriger Dispersionen nach Anspruch 7, dadurch gekennzeichnet, daß die Einheit der allgemeinen Formel (III) aus dem Umsetzen der Copolymere resultiert, die in wässeriger Emulsion hergestellt werden, enthaltend in Polymerbindung einerseits die Hauptmonomere (a) und andererseits Acrylamid und/oder Methacrylamid mit einem Glyoxalmonoacetal der allgemeinen Formel (IV)

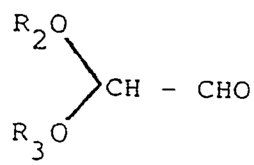 (IV),

worin $R_2$ und $R_3$ die in diesen Ansprüchen angegebene Bedeutung in entsprechenden Mengen zum Einhalten der Menge von 1 bis 10% dieser Einheit der allgemeinen Formel (III) im Copolymerisat aufweisen.

9. Anwendung der Dispersionen nach einem der Ansprüche 1 bis 8 zur Herstellung von Bindemitteln und/oder Imprägniermitteln.

## Claims

1. Aqueous dispersions of thermally cross-linkable copolymers based on alkyl(meth)acrylate, characterized in that they contain a copolymer prepared in an aqueous emulsion containing :

90 to 99% by weight of repeating units resulting from the polymerization of a mixture of main monomers (a) formed by 0.1 to 10% by weight of alpha-beta, ethylenic mono- and/or dicarboxylic $C_3$-$C_5$ acids, and/or their amides, 0 to 10% by weight of styrene and/or acrylonitrile, the remainder being up to 100% of esters of acrylic acid and/or methacrylic acid and $C_1$-$C_{12}$ alkanols ;

10 to 1% by weight of repeating units having the general Formula (I)

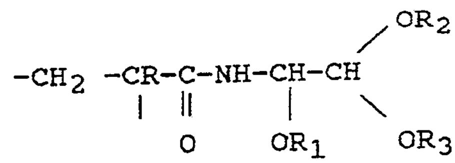

(I)

where R denotes a hydrogen atom or a methyl radical, $R_1$ denotes a hydrogen or a $C_1$-$C_4$ alkyl radical, and $R_2$ and $R_3$ are either identical, in which case they each denote a $C_1$-$C_8$ alkyl group, or together form a group $-CH_2-CR_4R_5-(CH_2)_n-$ in which n is 0 or 1 and $R_4$ and $R_5$, which are identical or different, denote a hydrogen atom or a methyl group.

2. Dispersions according to claim 1, characterized in that the copolymer contains :

92 to 98% by weight of repeating units deriving from the polymerization of a mixture of 95 to 99.8 parts of esters of acrylic acid and/or methacrylic acid with $C_1$-$C_{12}$ alkanols and 0.2 to 5 parts of acrylic acid, methacrylic acid, acryl amide and/or methacryl amide and

2 to 8% by weight of repeating units having the general Formula (I).

3. Dispersions according to claims 1 or 2, characterized in that the copolymer contains :

92 to 98% by weight of repeating units deriving from the polymerization of a mixture of 95 to 99.8 parts of methyl(meth)acrylate, ethyl(meth)acrylate, n-butyl(meth)acrylate and 0.2 to 5 parts of acrylic acid and/or acryl amide and

2 to 8% by weight of repeating units having the general Formula (I).

4. Dispersions according to any of claims 1 to 3, characterized in that in the general Formula (I) R denotes a hydrogen atom or a methyl radical, $R_1$ denotes a hydrogen atom or a $C_1$-$C_4$ alkyl radical and $R_2$ and $R_3$ are identical and denote a $C_1$-$C_4$ alkyl radical.

5. Dispersions according to claim 4, characterized in that in the general Formula (I), R and $R_1$ which are identical or different, denote a hydrogen atom or a methyl radical and $R_2$ and $R_3$ denote a methyl radical.

6. Dispersions according to any of claims 1 to 5, characterized in that the repeating unit of general Formula (I) has the general Formula (III)

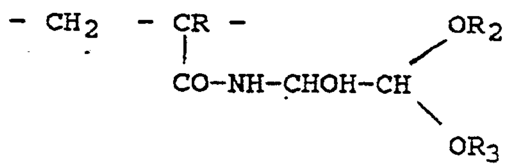

(III)

where R, $R_2$ and $R_3$ have the meaning given in said claims.

7. A process for the preparation of aqueous dispersions according to any of claims 1 to 6, characterized in that the polymerization is performed in an aqueous emulsion, with a pH of between 5 and 8, in the presence of a polymerization initiator which generates free radicals and emulsifying agents and (or) dispersing agent, of a mixture of molecules formed by the main monomers (a) in the proportions indicated in said claims and by a monomer (b) having the general Formula (II)

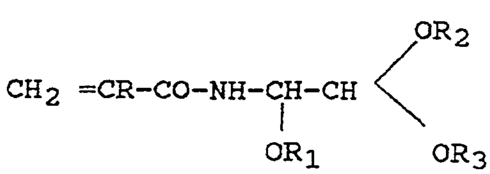

(II)

where R, $R_1$, $R_2$ and $R_3$ have the meaning given in said claims, in the proportions indicated in said claims for the repeating unit having the general Formula (I).

8. A process for the preparation of aqueous dispersions according to claim 7, characterized in that the repeating unit having the general Formula (III) results from the reaction of copolymers prepared in an aqueous emulsion containing in polymeric linkage on the one hand main monomers (a) and on the other hand acryl amide and/or methacryl amide with a glyoxal monoacetal having the general Formula (IV)

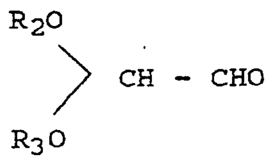

(IV)

where $R_2$ and $R_3$ have the meaning given in said claim in corresponding quantities to respect the proportion of 1 to 10% of said repeating unit having the general Formula (III) in said copolymer.

9. Application of the dispersions according to any of claims 1 to 8, for the obtaining of binders and/or impregnation agents.